Europäisches Patentamt

European Patent Office

Office européen des brevets

(19)

(11) Veröffentlichungsnummer : **0 439 747 B1**

(12) **EUROPÄISCHE PATENTSCHRIFT**

(45) Veröffentlichungstag der Patentschrift :
**02.03.94 Patentblatt 94/09**

(21) Anmeldenummer : **90123918.6**

(22) Anmeldetag : **12.12.90**

(51) Int. Cl.$^5$ : **C08G 18/10,** C08G 18/32,
C08G 18/42, C08G 18/76,
C08K 7/14

(54) **Verfahren zum Herstellen einer latent reaktiven, pastösen Formmasse.**

(30) Priorität : **01.02.90 DE 4002961**

(43) Veröffentlichungstag der Anmeldung :
**07.08.91 Patentblatt 91/32**

(45) Bekanntmachung des Hinweises auf die
Patenterteilung :
**02.03.94 Patentblatt 94/09**

(84) Benannte Vertragsstaaten :
**DE ES FR GB IT NL SE**

(56) Entgegenhaltungen :
**EP-A- 0 085 243**
**DE-A- 2 058 518**
**DE-A- 3 140 884**
**DE-A- 3 843 221**
**DATABASE WPIL, NO. 82-16526E, DERWENT**
**PUBLICATION & JP800087375**

(73) Patentinhaber : **Firma Carl Freudenberg**
**Höhnerweg 2-4**
**D-69465 Weinheim (DE)**

(72) Erfinder : **Mühlfeld, Horst**
**Siegfriedring 23**
**W-6149 Grasellenbach 3 (DE)**
Erfinder : **Schuhmacher, Günter, Dr.**
**Steingasse 11**
**W-6940 Weinheim (DE)**
Erfinder : **Hiller, Michael, Dr.**
**Rheinstrasse 18**
**W-6943 Birkenau (DE)**
Erfinder : **Schloer, Georg**
**Im Röthels 9**
**W-6941 Abtsteinach (DE)**

EP 0 439 747 B1

## Beschreibung

Die vorliegende Erfindung betrifft ein Verfahren zum Herstellen einer latent reaktiven, pastösen Formmasse, mit der elastifizierte Duromer-Formteile hergestellt werden können, wie sie beispielsweise im Kraftfahrzeugbau als Motorkapselungen, Hitzeschilde und Ansaugrohre oder, bei Textilmaschinen, als Trägerscheiben für die Stützrollen Verwendung finden.

Die bisher für diese Zwecke eingesetzten Phenol-, Epoxid- oder ungesättigten Polyesterharze weisen hohe Festigkeiten und eine dauerhafte Hochtemperaturbeständigkeit bis über 200°C auf. Eine Einschränkung erfahren diese vorteilhaften Eigenschaften jedoch wegen der - insbesondere bei Temperaturen unterhalb 0°C - großen Sprödigkeit dieser Duroplaste.

Neuerdings hat die Anmelderin zu Formkörpern verarbeitbare, latent reaktive Polyharnstoffe mit sehr guter Beständigkeit bei hohen und tiefen Temperaturen gefunden (noch nicht veröffentlichte deutsche Patentanmeldung P 39 40 159.6). Dieses erst oberhalb der Raumtemperatur reaktive, pastöse System besteht aus einem bei Raumtemperatur flüssigen Methylendiphenyldiisocyanat, aus einem erst oberhalb 120°C reaktiven Alkalihalogensalz-Komplex mit 4,4'- Diphenylmethandiamin oder alternativ aus Hexamethylen-6,6'-diamincarbamat, sowie aus 1 bis 625 Gewichtsteilen (pro 100 Teile Methylendiphenyldiisocyanat) niedermolekularem, isocyanatterminiertem Polyesterpolyol-Diisocyanat-Prepolymer, hergestellt aus Polycaprolacton und einem isomeren Gemisch des Toluylendiisocyanats. Diese Grundmischung, die einen NCO-Überschuß aufweist von bis zu 15% über die äquivalente Menge der freien OH- und NH$_2$- Anteile, kann mit Füllstoffen angereichert werden und ist bei niedrigen Drucken verformbar.

Sie kann auch als Tränkmittel für zu verformende Glasfasermatten verwendet werden.

Bei der Verarbeitung dieser Polyharnstoff-Systeme treten, insbesondere bei großflächigen Formteilen und solchen mit komplizierten Konturen, vielfach Schwierigkeiten dergestalt auf, daß bei Verarbeitungstemperaturen über 160°C diese hochreaktiven Systeme sofort an den Berührungsstellen der heißen Formplatten eine Polyharnstoff-Haut ausbilden und dadurch einer vollständigen Verdrängung der in der Formpresse eingeschlossenen Luft zuvorkommen.

Ein weiterer Nachteil besteht darin, daß der notwendige Diaminkomplex im Handel nur in Verbindung mit Weichmacher verfügbar ist. In den fertigen Formteilen verringert dieser die innere Bindung und Festigkeit; verstärkende Zusätze werden in ihrer Effektivität gemindert. Auch ist häufig ein allmähliches Ausschwitzen dieser Weichmacher zu beobachten.

Die Aufgabe der vorliegenden Erfindung besteht darin, für die Herstellung von hochtemperatur- und kältebeständigen Formteilen eine neue Formmasse als Grundmischung anzugeben, aus der elastifizierte Duromerformteile herstellbar sind, welche eine Vielfalt von Anforderungen, wie sie insbesondere von Fahrzeugherstellern vorgegeben werden, erfüllen:

Kältebeständigkeit bis hinab zu -40°C bei hoher Kerbschlagzähigkeit;

Formbeständigkeit bis hinauf zu +250°C (insbesondere bei der motornahen Anwendung der Formteile bedeutungsvoll);

Verformbarkeit bei Preßdrucken, die mindestens eine Zehnerpotenz unter den bisher oft erforderlichen 1000 t/m² liegen;

inertes Verhalten der Grundmischung auch bei längerer Lagerung und längerem Transport (Verbesserung der Verfügbarkeit größerer Mengen bereits hergestellter Formmassen);

sehr niedrige Viskosität der Grundmischung, um einen großen Spielraum bei der Zugabe von Füllstoffen zu haben (damit große Variationsbreite bezüglich der mechanischen Eigenschaften der herzustellenden Formkörper) und

dauerhafte Bindefähigkeit der Grundmischung, während oder nach dem Verformen, mit anderen Polyurethanwerkstoffen.

Es sollen dabei auch kompliziert konturierte und/oder großflächige Formteile bei Temperaturen über 160°C herstellbar sein, ohne daß die Formmasse vor dem vollständigen Entweichen der Luft aus dem Formhohlraum eine Haut bildet. Die eingesetzten Komponenten sollen frei von Weichmachern sein.

Ausgehend vom Kenntnisstand der vorgenannten älteren Patentanmeldung DE-P 39 40 159.6 wurde überraschenderweise gefunden, daß bei einer Verbindung von hochvernetzten Polyurethanaggregaten mit linearen, kurzkettigen Polyester-Diisocyanatprepolymer-Segmenten gemäß Anspruch 1 Polyurethan-Duromere erhalten werden, die alle oben genannten Anforderungen erfüllen.

Solche Polyurethan-Duromere könnten zwar gemäß dem Stand der Technik bei höherer Temperatur aus den flüssigen oder verflüssigten Ausgangskomponenten direkt im Gießverfahren gefertigt werden. Infolge der sehr hohen Reaktionsgeschwindigkeit dieser Systeme wäre ihre Verarbeitung bei der Produktion jedoch schwierig zu beherrschen, wenn nicht sogar unmöglich.

Das erfindungsgemäß eingesetzte, oberhalb 100°C reaktive, bei Raumtemperatur feinpulvrige, dimere Trimethylolpropan mit einem Molekulargewicht von 250 und einer OH- Zahl von 900 wird homogen in das flüssige Präpolymer-/Diisocyanat-Gemisch eindispergiert. Die Grundmischung soll einen bis zu 15 %igen Überschuß an NCO- Gruppen über die äquivalente Menge der vorhandenen, freien OH- Gruppen aufweisen. Durch diese Maßnahme wird einem zu starken Absinken der zur Reaktion benötigten Isocyanat-Gruppen vorgebeugt: Hielte man nämlich exakt stöchiometrische Bedingungen ein, so ergäbe sich ein NCO- Unterschuß infolge von Feuchtigkeitsgehalten der Mischungsbestandteile, von Schwankungen im OH- Gehalt des Polyols und von unkontrollierbaren Nebenreaktionen, z.B. Allophanat-, Biuret- oder Isocyanurat-Bildung.

Der Grundmischung liegen nur unverkappte Reaktionskomponenten zugrunde. Die dennoch bis hinauf zu 100°C bestehende Reaktionshemmung (eine reaktionsbedingte Viskositätsänderung der Masse ist in diesem Temperaturbereich nicht feststellbar) wird durch das Zweiphasensystem fest/flüssig bewirkt, wobei die in die verhältnismäßig niedrig viskose Phase dispergierten feinteiligen, festen Polyolteilchen allenfalls mit den äußerst wenigen, an der Oberfläche befindlichen OH- Gruppen reagieren können. Erst nach Erreichen der Schmelztemperatur des Polyols läuft die Polyurethan-Bildung mit merklicher Geschwindigkeit ab, d.h. bei in der Technologie üblichen Betriebstemperaturen von 170°C sind zum Beispiel 2 mm dicke Platten nach 90 s vollständig ausgehärtet.

In Gegensatz zur Polyharnstoffherstellung verläuft die erfindungsgemäße Polyurethan-Reaktion wesentlich milder, so daß bei den erforderlichen Verarbeitungstemperaturen von über 160°C eine zufriedenstellende Produktionssicherheit gewährleistet ist: Nach dem Einfüllen der zähviskosen Formmasse und dem Schließen der Form ist auch nach der Verteilung der Masse über das gesamte Formvolumen die Reaktion noch nicht so weit fortgeschritten, daß die Homogenität des Formteils beeinträchtigt werden könnte. Dabei werden jedoch die Zykluszeiten bei der Formteilfertigung, verglichen mit dem Stand der Technik, nicht unzumutbar verlängert, da der geschwindigkeitsbestimmende Faktor für das Durchhärten der Reaktionsmasse allein die Wärmeleitfähigkeit der Duromeren ist.

In der heißen Form bilden sich keine Lufteinschlüsse, weil zunächst die Masse sogar eine Viskositäts-Verminderung erfährt und die Reaktion erst nach dem Entweichen der gesamten Luft aus dem Form-Hohlraum bis zur vollständigen Aushärtung des Formteils weiterläuft.

Wegen des Fehlens jeglicher Weichmacher erfolgt kein Ausschwitzen aus den fertigen Formkörpern. Sie besitzen, was noch im folgenden dargestellt werden wird, eine sehr hohe innere Festigkeit.

Als bei Raumtemperatur flüssige polymere, höherfunktionelle Isocyanate mit einer Funktionalität von 2 bis 3 können verwendet werden zum Beispiel (Roh-) 4,4'-Methylendiphenyldiisocyanat (MDI) oder ein carbodiimidmodifiziertes MDI. Beide sind als Polyurethan-Edukte im Handel erhältlich.

Die weitere Komponente der Grundmischung, das isocyanatterminierte Polyesterpolyol-Diisocyanat-Prepolymer mit einem Molekulargewicht von 800 bis 1350, wird hergestellt aus den Edukten Polycaprolacton mit einem Molekulargewicht von 500 bis 1000 und dem 2,4-/2,6- Isomerengemisch des Toluylendiisocyanats mit einem Mischungsverhältnis von 80:20. Dieses Prepolymer wird zu 1 bis 625 Gewichtsteilen pro 100 Teile des polymeren, höherfunktionellen Isocyanats zugesetzt.

Weiterer und erfindungsgemäßer Bestandteil der Grundmischung ist feinteiliges, dimeres Trimethylolpropan mit einem Schmelzpunkt von 109°C, einem Molekulargewicht von 250 und einer OH-Zahl von 900. Seine Eignung für die vorliegende Erfindung ergibt sich unter anderem in reaktionschemischer Hinsicht daraus, daß ein "Tetrol", d.h. eine vierfunktionelle OH-aktive Verbindung, vorliegt, die mit dieser Eigenschaft einen sehr hohen Vernetzungsgrad gewährleistet. Dies drückt sich im Endprodukt dadurch aus, daß eine für Polyurethan-Formteile ungewöhnlich hohe Temperaturstabilität (über 200°C) ohne weiteres erreicht wird.

Oberhalb 100°C reagiert das dimere Trimethylolpropan mit dem mehrfunktionellen Polyisocyanat und den endständigen Isocyanatgruppen der Polyesterpolyurethan-Prepolymeren zu hochvernetztem Polyurethan. Unterhalb dieser Temperatur findet keine nennenswerte Reaktion statt.

Die bei Raumtemperatur nicht reaktive Grundmischung besitzt eine Viskosität von nur 1000 bis 5000 cP. Dieser Viskositätsbereich liegt ausreichend niedrig, um hochgefüllte und dennoch fließfähige, pastöse Massen aus der flüssigen Grundmischung herstellen zu können. Ein bedeutend hoher Zusatz von Füllstoffen ist bekanntermaßen zur Variierung der mechanischen Eigenschaften der herzustellenden Formkörper oft erforderlich. Mit der Erfindung wird dabei dennoch die Masse nicht so stark verfestigt, daß ein Preßdruck beim Verformen bis zu 1000 t/m² notwendig wäre. Es wurde gefunden, daß selbst bei Zusatz von 150 Gew.-% an Füllstoffen zur Grundmischung Preßdrucke zum Verformen notwendig sind, die lediglich im Bereich von 10 t/m² liegen.

Der Zusatz von Füllstoffen zu verformbaren Massen ist im übrigen eine bekannte Technik; diese Füllstoffe können zum Beispiel sein Textilfasern, Glasfasern, Kreidemehl, Flugasche, Hohlglaskugeln oder Abmischungen davon.

In einer weiteren Ausgestaltung der Erfindung ist es möglich, eine Glasfasermatte mit der Grundmischung, die gegebenenfalls noch weitere Füllstoffe enthalten kann, zu tränken.

Auf diese Weise werden nach dem Verformen besonders zähe Formkörper erhalten; wegen der geringen Viskosität der Grundmischung dringt diese vollständig in die Poren der Glasfasermatte ein, was die mechanische Stabilität des entstehenden Formkörpers erhöht.

Mit dem erfindungsgemäßen Verfahren ist somit eine Grundmischung herstellbar, der wegen ihrer niedrigen Viskosität eine große Menge an Füllstoffen zugefügt werden kann, weswegen der Fachmann die mechanischen Eigenschaften des herzustellenden, elastifizierten Formkörpers in weiten Bereichen zu beeinflussen in der Lage ist, wenn er Art und Menge der Zuschläge gezielt wählt. So können Härte, Festigkeit, Steifigkeit, Biegefestigkeit, Dimensionsstabilität und spezifisches Gewicht des fertigen Formkörpers auf einfache Weise modifiziert werden: Ein Zusatz von separierten Glasfasern erhöht die Festigkeit und den Elastizitätsmodul des Formkörpers. Feinkörnige Füllstoffe z.B. Kreide, erhöhen dessen Steifigkeit. Mit Flugasche als Zusatz zum niedrigviskosen Reaktionsgemisch kann das spezifische Gewicht des Formkörpers erniedrigt werden. Werden Glasfasermatten mit der viskosen, reaktiven Mischung, die weitere Füllstoffe enthalten kann, getränkt, können durch Heißverpressen besonders dimensionsstabile Formkörper hergestellt werden, die eine hohe Reißfestigkeit aufweisen.

In jedem Fall sind die Verformungsbedingungen sehr mild, da wegen der geringen Zähigkeit der Formmasse auf Basis der erfindungsgemäßen Grundmischung der mechanische Widerstand gegen den Preßdruck klein ist, und zwar bedeutend kleiner, als dies bei der Verformung von Thermoplasten der Fall ist.

Ein Temperaturbereich von 150°C bis 180°C für das Verpressen hat sich im Hinblick auf eine kurze Aushärtungszeit und damit kurze Zykluszeiten an der Presse als besonders günstig erwiesen.

Die Grundmischung läßt sich in der Presse leicht mit anderen Polyurethanwerkstoffen verbinden durch Verpressen des Verbundes beider Werkstoffe bei 160°C bis 180°C, auch wenn diese in geschäumter Form vorliegen. Gleichzeitig mit dem Verpressen findet die Verformung statt. Die Verwendung eines Haftvermittlers erübrigt sich, weil die Grundmischung latent reaktiv ist.

Alternativ dazu kann ein bereits fertig verformter Duromerkörper mit einem flüssigen, erfindungsgemäß hergestellten Polyurethan-Reaktionsgemisch beschichtet werden. Nach der Aushärtung wird ebenfalls eine sichere Bindung beider Werkstoffe aneinander erhalten. Der Einsatz eines Haftvermittlers ist entbehrlich; dennoch ist der Verbund so fest, daß ein zerstörungsfreies Trennen der Bestandteile voneinander nicht mehr möglich ist.

Aus den obigen Ausführungen und den nachstehenden Beispielen werden die vorteilhafte Verwendbarkeit der neuen reaktiven Formmasse sowie ihr Verhalten in der Preßform deutlich.

Beispiel 1:

Prepolymerrezeptur:

100,0    Gewichtsteile Polycaprolacton mit einem Molekulargewicht von 540
59,2    Gewichtsteile Toluylendiisocyanat; 80/20-Isomerengemisch 2,4-/2,6-Toluylendiisocyanat

Herstellung des Prepolymeren:

Polycaprolacton wird mit Toluylendiisocyanat unter Rühren 30 Minuten lang bei einer Temperatur von 100° C umgesetzt. Man erhält ein Prepolymer mit einem Isocyanatgehalt von 8,18 % und einer Viskosität von 54000 cP.

Rezeptur der latent reaktiven Mischung:

86,0    Gewichtsteile Prepolymer mit einem NCO-Wert von 8,18 %
50,4    Gewichtsteile Roh-MDI (rohes 4,4'- Methylendiphenyldiisocyanat) mit einem NCO- Wert von 30,0 % (durch Analyse vorermittelt)
31,2    Gewichtsteile dimeres Trimethylolpropan mit einem Molekulargewicht von 250 und einer OH-Zahl von 900
111,0    Gewichtsteile Kreide mit einem mittleren Teilchendurchmesser von 3 μm.

Herstellung der latent reaktiven Mischung:

Die drei Grundkomponenten
Prepolymer,

Roh-MDI,
dimeres Trimethylolpropan
werden in einem Rührbehälter bei Raumtemperatur vorgemischt. Die Kreide wird anschließend unter Rühren der Grundmischung zugegeben. Es entsteht eine gut gießfähige Paste mit einer Viskosität von 72000 cP.

Diese Paste kann mindestens 4 Wochen unter Feuchtigkeitsausschluß in einem dicht verschlossenen Behälter aufbewahrt werden ohne Einbuße der guten Verarbeitbarkeit und ohne Veränderung in den Eigenschaften.

Zur Bestimmung der Festigkeitseigenschaften werden Prüfplatten aus Endlosglasfasermatten gefertigt. Diese sind getränkt mit einer Reaktivpaste. Nach 90 Sekunden bei 170°C und bei einem Preßdruck von 1 kg/cm² ist die Aushärtung vollständig durchgeführt. Eine Nachbehandlung ist nicht erforderlich. Der Glasfasergehalt beträgt im Endprodukt 25 Gew.-%.

Festigkeitseigenschaften:

```
Zugfestigkeit:                            88 N/mm²
Bruchdehnung:                            1,5 %
Elastizitätsmodul:                      8400 N/mm²
Biegefestigkeit:                         213 N/mm²
Biegemodul:                             8700 N/mm²
Randfaserdehnung:                        3,5 %
Schlagzähigkeit bei Raumtemperatur:       42 mJ/mm²
Schlagzähigkeit bei - 40°C                51 mJ/mm²
```

Prüfung der Temperaturbeständigkeit

Zur Prüfung der Temperaturbeständigkeit des duromeren Werkstoffes wird ein Kriechtest durchgeführt. Hierbei wird die Durchbiegung von belasteten Prüfstäben in Abhängigkeit von der Temperatur gemessen. Die nach dem Beispiel hergestellten Prüfstäbe zeigen nach 24 Stunden bei 180°C unter Belastung noch keine Verformung.

Man erkennt an den obigen Werten die hohe Belastbarkeit des Werkstoffes, insbesondere auch über einen Temperaturbereich von weit unter dem Gefrierpunkt bis zu sehr hohen Temperaturen.

Formen einer Motorkaspelung

In eine auf 170°C aufgeheizte Form wird ein Glasfaserzuschnitt, der aus einer Endlosglasfasermatte mit einem Quadratmetergewicht von 459 g ausgestanzt wurde, eingelegt.

Die reaktive Paste wird über den Glasfaserzuschnitt gegossen, ein zweiter Glasfaserzuschnitt wird aufgelegt und die Form geschlossen. Bei einem Preßdruck von 1 kg/cm² werden die Glasfasermatten von der Paste vollständig durchtränkt, und die Form wird gleichmäßig ausgefüllt. Nach 90 Sekunden ist die Verformung abgeschlossen. Das 2 mm dicke Formteil ist vollständig durchgehärtet; eine Nachbehandlung ist nicht mehr notwendig.

Hierbei ist nach dem Schließen der Form stets ein gleichmäßiges Verlaufen und eine vollständig homogene Verteilung der flüssigen Reaktionsmasse über das gesamte Volumen der Form festzustellen. Die Reaktionsgeschwindigkeit sowie die Durchwärmung der Füllmasse sind dergestalt verzögert, daß ein zu frühes Anspringen der Reaktion an der Formoberfläche vermieden wird. Hautablösungen, eingeschlossene Luft (Lunker) oder nicht ausgefüllte Hinterschneidungen sind nicht zu beobachten.

Beispiel 2:

Dieses Beispiel soll zeigen, daß. alternativ zu Roh-MDI, auch andere flüssige Methylendiphenyldiisocyanate vorteilhaft eingesetzt werden können, sofern sie eine Funktionalität von 2 bis 3 aufweisen.

Das hier eingesetzte modifizierte MDI wird dann bevorzugt, wenn erhöhte Ansprüche an die Hydrolysebeständigkeit des Produkts gestellt werden. Die beim vorliegenden Diisocyanat in dessen Molekülaufbau integrierten Carbodiimid-Segmente fördern bekanntermaßen diese Eigenschaft.

EP 0 439 747 B1

Rezeptur der latent reaktiven Mischung:

120,0     Gewichtsteile Prepolymer, wie in Beispiel 1
95,0     Gewichtsteile carbodiimid-modifiziertes MDI mit einem analytischen NCO-Wert von 29,6 %
53,6     Gewichtsteile dimeres Trimethylolpropan nach Beispiel 1
179,0     Gewichtsteile Kreide mit einem mittleren Teilchendurchmesser von 3 μm

Herstellung der latent reaktiven Mischung:

In einem Rührbehälter werden die drei Grundkomponenten vorgemischt, und anschließend wird die Kreide eingerührt. Die Viskosität der als gießfähige Paste vorliegenden, latent reaktiven Mischung beträgt 69000 cP. Die Festigkeitseigenschaften von Prüfplatten, die gemäß Beispiel 1 gefertigt wurden, sind:

| | |
|---|---|
| Zugfestigkeit: | 94 N/mm² |
| Bruchdehnung: | 1,5 % |
| Elastizitätsmodul: | 8600 N/mm² |
| Biegefestigkeit: | 190 N/mm² |
| Biegemodul: | 8550 N/mm² |
| Randfaserdehnung: | 3,2 % |
| Schlagzähigkeit bei Raumtemperatur: | 40 mJ/mm² |
| Schlagzähigkeit bei -40°C | 47 mJ/mm² |

Diese Werte machen die hohe Belastbarkeit des ausreagierten Produktes über ein breites Temperaturspektrum deutlich.

Eine Motorkapselung mit zahlreichen Hinterschneidungen kann einwandfrei geformt werden, wie es in Beispiel 1 beschrieben ist. Lufteinschlüsse fehlen, und das Bauteil ist völlig homogen durchgehärtet.

**Patentansprüche**

1.   Verfahren zum Herstellen einer latent reaktiven, pastösen Formmasse zur Herstellung von elastifizierten Duromer-Formteilen, welche von -40°C bis +250°C formbeständig sind, aus einer viskosen, einen Überschuß an NCO- Gruppen bis zu 15 % über die äquivalente Menge der freien OH- Gruppen aufweisenden Grundmischung aus

    a) bei Raumtemperatur flüssigem Methylendiphenyldiisocyanat mit einer Funktionalität von 2 bis 3 und aus

    b) 1 bis 625 Gewichtsteilen (pro 100 Teile Methylendiphenyldiisocyanat) eines Polyesterpolyol-Diisocyanat-Prepolymeren mit einem Molekulargewicht von 800 bis 1350, hergestellt aus den Edukten Polycaprolacton mit einem Molekulargewicht von 500 bis 1000 und dem 80/20- Isomerengemisch des 2,4-/2,6- Toluylendiisocyanats, zusammen mit

    c) einer erst oberhalb der Raumtemperatur mit NCO- Gruppen in hoher Vernetzung reagierenden Verbindung,

dadurch gekennzeichnet, daß man als Verbindung c) dimeres Trimethylolpropan mit einem Schmelzpunkt von 109°C, einem Molekulargewicht von 250 und einer OH-Zahl von 900 einsetzt.

2. Verfahren nach Anspruch 1, dadurch gekennzeichnet, daß man bis zu 150 Gew.% Füllstoffe in Körner-, Pulver- oder Faserform zusetzt.

3. Verwendung einer Grundmischung gemäß Anspruch 1 als Tränkmasse für eine Glasfasermatte.

**Claims**

1. A process for the preparation of a latently reactive, pasty moulding composition for the production of elasticized thermoset mouldings which are dimensionally stable at from -40°C to +250°C, from a viscous base mixture containing an NCO group excess of up to 15% of the equivalent amount of free OH groups, comprising
   a) methylenediphenyl diisocyanate having a functionality of from 2 to 3 which is liquid at room temperature, and
   b) from 1 to 625 parts by weight (per 100 parts of methylenediphenyl diisocyanate) of a polyesterpolyol diisocyanate prepolymer having a molecular weight of from 800 to 1350, prepared from the starting materials polycaprolactone having a molecular weight of from 500 to 1000 and an 80/20 isomer mixture of 2,4- and 2,6-tolylene diisocyanate, together with
   c) a compound which only reacts at above room temperature with NCO groups with considerable crosslinking,
   characterized in that compound c) is dimeric trimethylolpropane having a melting point of 109°C, a molecular weight of 250 and an OH number of 900.

2. A process according to claim 1, characterized in that up to 150% by weight of fillers in granular, powder or fibre form are added.

3. The use of a base mixture according to claim 1 as an impregnating composition for a glass-fibre mat.

**Revendications**

1. Procédé de préparation d'une masse de moulage pâteuse à réactivité latente pour préparer des pièces moulées en duromère élastifiées qui présentent une stabilité de forme entre -40 C et +250 C en utilisant un mélange de base visqueux présentant un excès de groupe NCO pouvant atteindre 15% par rapport à la quantité équivalente des groupes OH libres et formée de
   a) du diisocyanate de méthylènediphényl liquide à température ambiante avec une fonctionnalité de 2 à 3 et
   b) de 1 à 625 parties en poids (pour 100 parties de diisocyanate de méthylènediphényl) d'un prépolymère de diisocyanate de polyesterpolyol ayant un poids moléculaire de 800 à 1350 préparé au départ de polycaprolactone avec un poids moléculaire de 500 à 1000 et du mélange 80/20 des isomères 2,4/2,6- du diisocyanate de toluène avec
   c) un composé réagissant avec groupes NCO au-delà de la température ambiante avec une forte réticulation
   caractérisé en ce que l'on utilisé comme composé c) du triméthylolpropane dimère ayant un point de fusion de 109 C, un poids moléculaire de 250 et un indice OH de 900.

2. Procédé selon la revendication 1 caractérisé en ce que l'on ajoute jusqu'à 150 parties en poids de matières de charge sous forme de grains, de poudre ou de fibres.

3. Utilisation d'un mélange de base selon la revendication 1 comme masse d'imprégnation pour une nappe de fibres de verre.